# EUROPEAN PATENT SPECIFICATION

(11) **EP 2 769 276 B1**
(45) Date of publication and mention of the grant of the patent: **23.01.2019**
(21) Application number: 12783166.7
(22) Date of filing: 21.10.2012
(51) Int. Cl.: G05D 21/00, G05D 21/02

(54) **DEVICE AND METHOD FOR CONTROLLING, ANALYZING AND MANAGING PHASES OF CONSERVATION AND/OR PROCESSING OF FOOD IN A MOBILE OR FIXED CLOSED SPACE**
VORRICHTUNG UND VERFAHREN ZUR STEUERUNG, ANALYSE UND VERWALTUNG DER PHASEN ZUR KONSERVIERUNG UND/ODER VERARBEITUNG VON NAHRUNGSMITTELN IN EINEM MOBILEN ODER STATIONÄREN GESCHLOSSENEN RAUM
DISPOSITIF ET PROCÉDÉ POUR COMMANDER, ANALYSER ET GÉRER DES PHASES DE CONSERVATION ET/OU DE TRAITEMENT D'ALIMENT DANS UN ESPACE CLOS MOBILE OU FIXE

(30) Priority: 20.10.2011 IT MI20111902; 20.10.2012 IT CS20120036
(43) Date of publication of application: 27.08.2014
(73) Proprietor: Cuomo, Alessandro, 88900 Crotone (IT)
(72) Inventor: Cuomo, Alessandro, 88900 Crotone (IT)
(74) Representative: Perrotta, Aldo
(86) International application number: PCT/EP2012/070832
(87) International publication number: WO 2013/057302

(56) References cited:
- WO-A2-03/107109
- DE-A1- 3 319 528
- DE-A1- 3 343 800
- GB-A- 1 037 239

## Description

### Technical Field of the invention

The present invention relates to a method and a device for the programmable controlling, analyzing and managing of the processes of conservation and/or processing of food in a mobile or fixed closed space, such as by way of non-limiting example tanks, tank trucks, warehouses , refrigerated cabinets, cabinets and rooms for seasoning, where through the management of physical parameters of the space and/or of the food products the acidity of the food is checked by measuring pH, and where the instrument for measuring pH is calibrated before and/or during the phase of conservation and/or transformation, and the pH value of the food is maintained within predetermined limits through the management of the physical parameters in one or more phases of processing and/or conservation.

### State of the art

To process and/or to conserve food refrigerators, ovens or seasoning cabinets are used.

One of these is described in DE-A1-2725781 in which a device for transforming food products through the control and management of a sequence of physical parameters is present. Among the values that are checked is also the pH that nevertheless is not modified if it is found that is outside preset limits. Through the measure of pH the degree of acidity of foodstuffs is measured and pH is one of the values that influences healthiness, conservation and/or processing of food products.

DE-3319528-A1 describes a process for the maturation and drying of sausages or other similar foods in which during the treatment the decrease of pH and/or the loss of weight are measured and temperature, humidity and/or flow air rate are similarly controlled. Substantially the process controls that the pH is maintained within the preset limits but it has no means to make sure that by acting on the physical parameters of the environment the pH remains within the preset limits, neither the pH meter is calibrated prior to and during each measuring operation.

GB-1037239-A discloses a cooking appliance for jams in which the pH is measured continuously.

The increase or decrease in acidity outside of a predetermined range opens a valve in order to provide, in the first case, sodium citrate or alkali, and in the second case, citric acid.

The correction of acid takes place with the addition of chemicals which vary the composition of the foodstuff.

WO03107109-A describes a device for controlling or preparing a mixture of fluids, in particular a food or domestic mixture, comprises at least two addition ducts for a first and a sec and fluid getting in an area where the two fluids are mixed, so as to obtain a mixture getting out, and control means for flow rate adjusting elements for the first and second fluid, arranged on the addition ducts. The invention envisages detecting means for one or more physical-chemical properties of at least one among said mixture, first fluid and second fluid. In a preferred embodiment the detected physical-chemical quantity is pH. DE-3343800-A describes a process and apparatus for controlling the course of drying of foods, in particular uncooked sausage, in which water is removed from the material to be treated in the treatment chamber by supplying, if necessary, conditioned air until the desired degree of ripening and drying is achieved.

One of the purposes of the present invention, which is defined by the claims, is to provide a device for conserving and/or processing, in a mobile or fixed closed space, foods that, since it has been found a pH value outside of a safety preset range, said device is able, to bring the pH measured inside the safety preset range (pH minimum and pH maximum), through the control and management of physical parameters and after that the pH meter was calibrated, since it is equipped with a system of calibration of the pH measuring means.

The device monitors, analyzes and manages the processing or conservation of food, taking into account its degree of acidity and affects the change rather than degradation through actions on physical parameters created by a software integrated in its memory on board and indicates if the same food may be inadvisable or dangerous for human consumption in accordance with the food safety parameters laid down or imposed by law , or programmed by the user. The device has in its master unit a software that contains all foods that can be processed or conserved and for each food all the phases that must be performed, and for each phase of each food the allowed limits of pH, and if the measured pH is outside of these limits, the variations of the physical parameters that must be undertaken to restore pH within the limits provided for each phase.

The device, also, to accurately manage the changes of the physical parameters, has a system of calibration of the pH probes and re-parameterization software of the measuring means of pH, before, during and/or at each phase calibrates one or more pH probes through sequential immersion in two solutions at known pH and a software trace the curve of pH from 0 to 14, parameterizing and recoding the pH-metric software system.

The same instrument in the case of hyper-acidification and/or hyper-alkalinity of a foodstuff, i.e. alteration of the pH (power of hydrogen) compared to the safety limits imposed by law or set by the user and configured in the software will automatically send to a recipient, for example to the competent health authorities and/or to an appointed officer coded in the software or to a database, the identification of the owner of the fixed or mobile plant of processing and/or conserving, a printout of the report of historical data, by way of non limiting example, temperature, humidity, pH and calibration of such a graph showing the degradation curve, a photographic evidence (if possible), without the possibility that the user may affect the sending of such automated reporting.

The same device, as non-limiting example, in case of use for processing not liquid food in controlled fermentation, interacts and manages the fundamental physical factors such as: the control and analysis of pH (hydrogen power) - time - temperature - humidity - ventilation - shaking of the food - air flow - plant stops - with registration, visualization and memory of the same factors during use, to be applied on machines, systems or processing plants for food and/or refrigerated conservation.

Another main goal is to provide a method for the control and management of the conservation and/or processing of foods in a mobile or fixed closed space comprising data entry of food, sending said data to a master unit, processing data entered through a software program, control of physical parameters in each single phase, characterized by the fact that through the elaboration of data, the software program stores a safety rangeof the pH of the food that must be maintained in every phase, calibrates the system of measurement of pH, verifies continuously through the measurement of the pH of the food during conservation and/or processing, if the pH is within the range of safety determined and if the pH is outside the range determined, manages the means for varying the physical parameters of the space in which is inserted the product and/or said product, so as to bring the pH within the range of safety determined.

Process management for conserving and/or processing is controlled, analyzed, stored and played back automatically by a "MASTER" electronic control with interface for the operator.

Other features will become clear from the representation given by way of non-limiting example in figures 1, 2, 3 and 4.

### Brief description of the figures

Figure 1 shows the constituent elements of the device object of the present invention.
Figure 2 shows a logic diagram of the device object of the present invention.
Figure 3 shows an embodiment of the device object of the present invention to a facility for stewing - drying - seasoning - aging.
Figure 4 shows a graph and a printout, created and stored by the device object of the present invention.

### Description of the constituent elements of the device object of the present invention

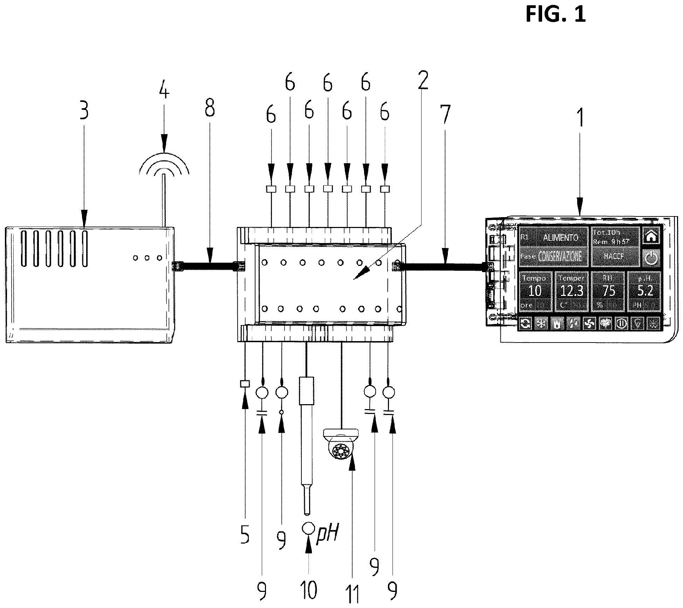

With reference to fig.1, the device for the control and management of the conserving and/or processing of foods, in a closed mobile or fixed space, comprises a user interface with controls and data entry (1), a programmable master unit control integrated with a system of measure of pH (2) consisting, preferably but not exclusively by one or more PLC, containing a software program with memory, means for controlling the physical parameters of the space in which the food is inserted and/or said food (9) such as by way of non-limiting example "temperature - humidity - air speed - shaking of the food - etc", means for controlling the continuous pH measurement of the food to be conserved and/or processed (10), and means controlled by the software program in order to vary the physical parameters of the space in which is inserted the food and/or said food, if pH is outside of a predetermined safety range (6), such as by way of non-limiting example means for the variation of "temperature - air speed - shaking of the food - humidity, etc.".

Data of the food that has to be conserved and/or processed are inserted through the elements of data entry by means of a user interface (1), said data will be stored in the "master unit".

The software contained in "master unit" (2) stores the safety rangeof pH that the food must maintain in every phase of conserving and/or processing and starts phases stored for conserving and/or processing and in each single phase, establishes and performs a determined trend of the physical parameters of the space in which the food is inserted and/or said food, such as air speed, shaking of the food, humidity and temperature.

The system of measurement of the pH is made to run continuously, and before coming into operation is calibrated and for greater security is calibrated at intervals of time.

The calibration of the measuring system of the pH integrated to the master unit (2), takes place immersing the probe for the control of pH measurement (10) in two solutions at known pH respectively 7 and 4 so that the software can acquire the potential difference produced by the probe for the control of pH measurement (10) at that given known value of the solution to known pH and will determine the correct calibration curve of pH from 0 to 14.

During each phase the pH of the food to be processed and/or conserved is measured continuously and if the measured pH is not within the safety range, the software intervenes on the means for controlling and modifying the physical parameters of the space in which the food is inserted and/or said food, varying the same parameters depending on the software installed in the "master unit", so as to influence pH to remain within the predetermined safety range.

The software, at the end of each phase, if it detects that pH has been brought back within the predetermined safety range, will store in the "master unit" (2) a report of the data of correct execution of the phase and will make it viewable to user interface (1) and if required it will be sent by means of the data transmission device (3) to recipient coded in memory.

If the software detects that pH in a phase has not been brought back within the predetermined safety range, anyhow will store into the "master unit" (2) a data report of non-compliance with the safety parameter of pH in that phase, it will be displayed on the user interface (1) giving to the user the choice to stop or continue the process of conserving and/or processing the food, and if required, will be sent by means of the data transfer device (3) to recipient coded in memory.

All data are traceable by means of physical memory inserted into the Master unit (2) and all data concerning the physical elements of the space and the food contained in a closed fixed or mobile space, detected continuously or at intervals of predetermined time in all processes of conserving and/or processing, the operations of calibration of the measuring system of the pH, the failure of the means of variation of the physical parameters of the closed space and/or of said food, the failure of the means of physical parameters control of the closed space and/or said food are transmitted by means of the data transmission device (3).

The system of measurement of pH is constituted by: a pH meter integrated into the "master unit" (2), one or more probes for the control of pH measurement (10) and a calibration software integrated into the "master unit" (2).

### Description of the logic diagram of the device object of the present invention

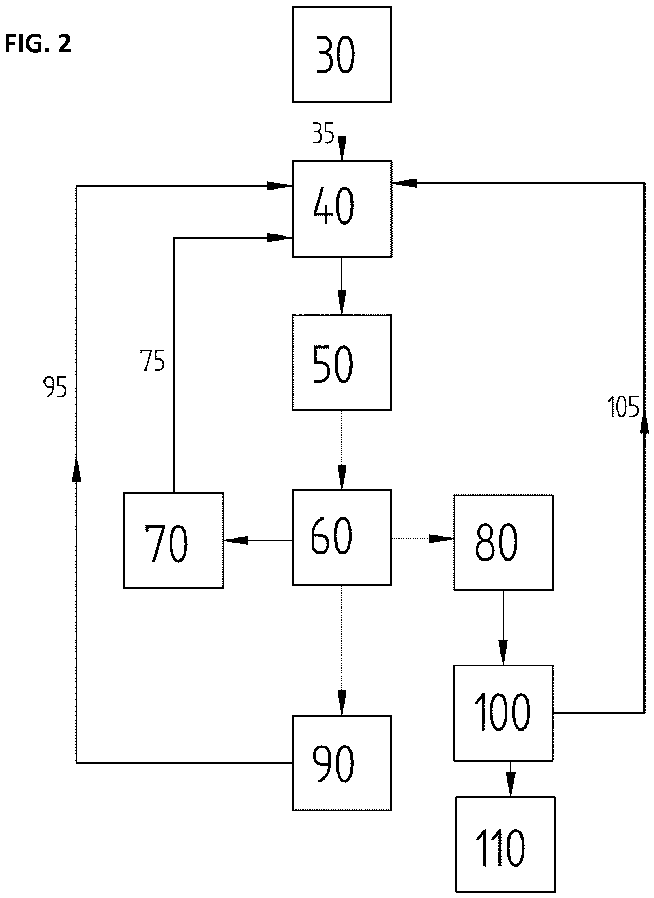

The method object of the present invention is schematically represented in Fig. 2, the method for conserving and/or processing of a food involves the following steps:
30 Entry of the food Data that you want to conserve and/or transform into a mobile or fixed closed space, data entry takes place via a real keyboard or touch screen or in any other way;
35 sending data to a master unit;
40 processing of data in a master unit, which contains a memory and a software program and that according to the entered data establishes the phases of conserving and/or processing, storing safety intervals of pH of the food which must be maintained in each phase;
50 continuous control during each phase of the physical parameters of the space and/or the food so that they are maintained in predefined rangess by the software;
60 continuous monitoring of pH in each phase;
70 verification, if controlled pH value is outside the safety range predetermined by the software;
75 continuous sending of the measured pH value to the master unit, which through the software changes the values of the physical parameters of the space and/or food, to influence the pH of the food to remain in the predetermined safety range;
80 verifies that in the duration time of the individual phase the pH value has come back in the predetermined safety range of pH;
90 The calibration of the integrated measuring system of pH, takes place by immersing the control means of pH measurement in two solutions at known pH respectively 7 and 4.
95 sending of the values obtained with the two solutions at pH 7 and pH 4 that through the software the master unit determines the correct calibration curve of pH from 0 to 14.
100 storing a data report positive if the phase was conducted with pH within the expected safety limits and negative if the phase was conducted with pH outside the required safety range;
105 sending to the master unit a report of positive or negative data of single phase of conserving and/or processing, the master unit if the data report is positive verifies if there is a next phase and will start automatically, if the report is negative will give to the user the choice whether to block or to continue the process of conserving and/or processing the food.
110 End of the process if there are other steps to be performed.

### DESCRIPTION OF AN EMBODIMENT OF THE PRESENT INVENTION. APPLIED TO A STEWING - DRYING - AGING - SEASONING PLANT

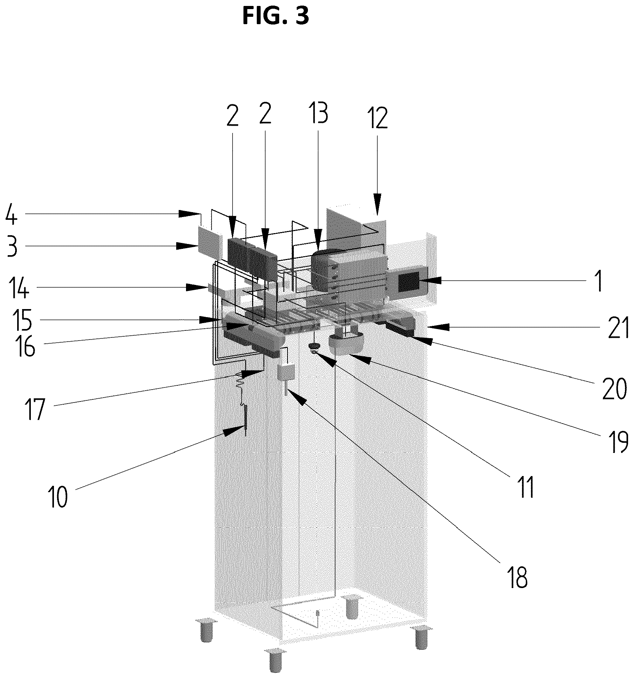

With reference to fig.3, the device for the control and management of the storage and/or processing of foods in a closed space, applied to a stewing - drying - aging - seasoning plant, comprises an interface with data insertion element (1), a control master unit programmable and integrated with a measuring system of pH, consisting of two PLC containing a memory, a software program (2), means for the control of physical parameters such as by way of non-limiting example "means to controlling the speed of the air (15), means for controlling humidity of the air (18), means for controlling the temperature of the air (17), means for controlling the pH measurement in continuous, to insert in the food to be conserved and/or processed (10), and means controlled by the software program in order to vary the physical parameters if the pH is outside of a predetermined safety range, such means for the variation of the physical parameters are means for the variation in humidity of the air (12), means for varying the speed of the air (16), means for the variation of the physical parameter of the air of the closed space in which is inserted the food, heating unit (20) and refrigeration unit (13). Through data input elements in the memory of master unit (2) food data you want to conserve and/or process are entered through the user interface (1), for example: "time - temperature - humidity - pH safety range," The software stores the content in the PLC and determines the course of the physical parameters inside the closed space to influence the pH of the food to remain in the range of pH that food safety must be maintained in every phase of conservation and/or processing.

The software initiates the phase of conserving and/or processing of a foodstuff and for each phase establishes and performs a certain trend of physical parameters, such as speed, humidity and the temperature of the closed space in which the food is inserted. During each phase pH (10) of the food to be processed is continuously measured. If measured pH is not within the safety range of pH during conserving and/or processing that is executing the PLC intervenes on the means for the control and the variation of the physical parameters of the air, for example on means for controlling the speed of the air (15), on the means for the control and the variation of air humidity (18,12), on the means for the control and the variation of the temperature (17,20,23), varying depending on the software installed in the master PLC (2) the speed, the humidity and the air temperature inside the closed space in which the food is inserted so as to bring pH within the predetermined safety range.

If the software detects that the pH of food safety has been brought back within the predetermined interval, at the end of each phase, the unit will store in the "master unit" (2) a data report of correct execution of the phase and will make it viewable on the user interface (1) and if required will be sent by means of the data transmission device (3) to recipients coded in memory.

If the software detects that the pH in a phase has not been brought back within the predetermined pH safety range, in any case a data report of non-compliance with the safety parameter of the pH in that phase will be stored into the "master unit" (2), it will be displayed on the user interface (1) giving to the user the choice to stop or continue the process of conserving and/or processing of the food, and if required, will be sent by means of the data transfer device (3) to recipient coded in memory.

For the safety of the analysis and control system of the pH of the food, the calibration of the measuring system of the pH integrated to the master unit (2), takes place by immersing the means of control of the pH measurement (17) in two solutions at known pH respectively at pH 7 and 4 so that the software can acquire the potential difference produced by the probe to measure the pH (17) at that given the known value of the solution with the known pH and will determine the correct calibration of the curve of pH from 0 to 14.

### Description of the graph and the tabulated created and stored by the device object of the present invention.

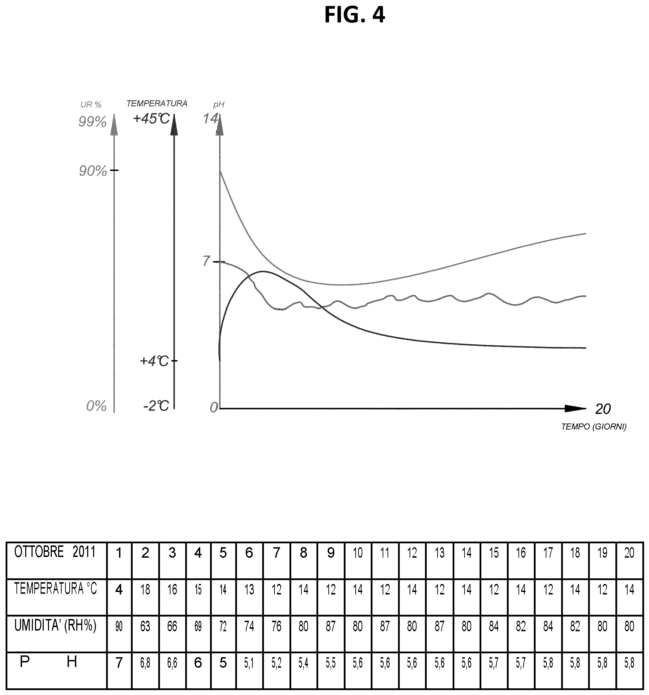

Non-limiting example of chart and printout produced by the software with reference to Fig.4, with data acquired in the memory on Board of the "Master unit" (2) in 20 days, which if required will be sent automatically by means of the data transmission device (3) to recipient coded in memory or to a data bank. The same data through a serial connection present in the "Master unit" (2) can be downloaded to a computer for analysis and printing.

## Claims

1. Device for controlling, analyzing and managing phases of conservation and/or processing of food in a mobile or fixed closed space comprising a user interface with elements for data entry (1), a master control unit with memory and software (2), a management means system of the physical parameters of the food and/or of the space in which said food (6) is inserted, integrated means for controlling and measuring the pH, a calibration system of the means for controlling and measuring the pH (10), means for controlling physical parameters of food and/or of the space in which said food (6) is inserted, **characterized by** the fact that the master unit has a software program which has in memory one or more foods to be conserved and/or transformed, and for each food and for each phase the succession of variations of the physical parameters for each phase of conserving and/or processing, which has for each phase a safety range of pH where said software manages for each value of the pH measured outside the safety range of each phase a management program of physical parameters of food and/or the space in which said food (6) is inserted to bring the pH value within the safety range of pH.

2. Device for controlling, analyzing and managing phases of conservation and/or processing of food in a mobile or fixed closed space according to claim 1 **characterized in that** the measuring system of the pH that has a pH integrated calibration system for controlling and measuring the pH (10) is equipped with one or more probes for pH, two solutions with known pH and a software that before and/or during each phase calibrates one or more probes for pH through sequential immersion of said probe/s in the two solutions at known pH, tracing the curve of pH from 0 to 14, parameterizing and recoding the integrated pH-metric software system.

3. Device for controlling, analyzing and managing phases of conservation and/or processing of food in a mobile or fixed closed space according to claim 1 or 2 **characterized in that** the means for controlling physical parameters of the food and/or of the space in which said food (6) is inserted, are one or more temperature probes, one or more humidity probes, one or more probes to controlling the air velocity and/or shaking of the food.

4. Device for controlling, analyzing and managing phases of conservation and/or processing of food in a mobile or fixed closed space according to claim 1 **characterized by** the fact that all data regarding the physical elements of the space and the food inserted in a fixed or mobile closed space, are detected continuously or at predetermined and programmable time intervals, in all conserving and/or processing processes, all the calibration operations of the measuring system of the pH, all the failures of the variation means of physical parameters of the closed space and/or said food, all the failures of the control means of physical parameters of the closed space and/or said food are stored in the master unit.

5. Method for controlling, analyzing and managing phases of conservation and/or processing of food in a mobile or fixed closed space, comprising inserting, in a software program integrated into a master unit, the data of the food or foods, physical parameters of the closed space and/or said food, phases of conserving and/or processing that the food and/or the space in which said food is inserted must follow, measuring pH and calibrating the measurement system of the pH, **characterized in that** said software program integrated into the master unit stores a safety interval of the pH of the food that must be maintained in each phase of conserving and/or processing set by the user, which manages, in each phase, for each value of the measured pH which falls outside the safety range of each phase a management program of the physical parameters of the food and/or the space in which said food is inserted (6) that brings back the pH value within the safety range of the pH.

6. Method for controlling, analyzing and managing phases of conservation and/or processing of food in a mobile or fixed closed space, according to claim 5 **characterized in that** the calibration of the system for continuous measurement of pH in a food is made through the calibration of the probes in two solutions at known pH and through a sotware integrated to the system which traces the curve of pH from 0 to 14.

7. Method for controlling, analyzing and managing phases of conservation and/or processing of food in a mobile or fixed closed space, according to claim 5 **characterized in that** at the end of each phase a series of data is stored inside the device, said series of data are positive if the phase was carried out with the pH in the safety limits and negative if the phase was conducted with the pH outside the safety limits of the selected range.

8. Method for controlling, analyzing and managing phases of conservation and/or processing of food in a mobile or fixed closed space, according to claim 6 **characterized in that** the measured pH value is continuously monitored and/or transmitted by a device of data transmission (3) to one or more recipients coded in said device.

9. Method for controlling, analyzing and managing phases of conservation and/or processing of food in a mobile or fixed closed space, according to claim 7 **characterized in that** the master unit at the end of each phase of conserving and/or processing, gets a set of values, if these values are all inside the set safety range, automatically the next phase starts, and if these values fall outside the safety range, the device before starting the next phase will communicate and store a report of the values, and wait for instructions from the user whether to continue the process of conserving and/or processing or stop it.

10. Method for controlling, analyzing and managing phases of conservation and/or processing of food in a mobile or fixed closed space, according to claim 6 **characterized in that** the measuring system of the pH in a food is integrated to the device object of the present invention, and that the calibration takes place by immersing the means of control of the pH measurement (10) in two solutions at known pH respectively at pH 7 and 4 so that the software can acquire the difference of the potential produced by the measuring probe of pH (10) at that given known value of the solution with known pH by determining the correct calibration of the curve of pH from 0 to 14 in the measuring integrated system of pH.

## Patentansprüche

1. Vorrichtung zum Steuern, Analysieren und Verwalten der Konservierungsschritten und/oder zur Lebensmittelverarbeitung in einem beweglichen oder festen geschlossenen Raum umfassend eine Benutzerschnittstelle mit Elementen zur Dateneingabe (1), eine Hauptregeleinheit mit Speicher und Software (2), ein Verwaltungsmittelsystem der physikalischen Parameter der Lebensmittel und/oder des Raums, wo das Lebensmittel (6) eingeführt wird, integrierte Mittel zum Steuern und Messen von pH, ein Kalibrierungssystem der Mittel zum Steuern und Messen von pH (10), Mittel zum Steuern der physikalischen Parameter der Lebensmittel und/oder des Raums, wo das Lebensmittel (6) eingeführt wird, **dadurch gekennzeichnet, dass** die Haupteinheit ein Softwareprogramm hat, das im Speicher ein oder mehrere zu konservierende und/oder zu verarbeitende Lebensmittel hat, und für jedes Lebensmittel und für jeden Schritt die Reihenfolge der Änderungen der physikalischen Parameter für jeden Konservierungs- und/oder Verarbeitungsschritt hat, was für jeden Schritt einen pH-Sicherheitsbereich hat, in dem die Software für jeden gemessenen pH-Wert außerhalb des Sicherheitsbereichs jedes Schritts ein Verwaltungsprogramm der physikalischen Parameter der Lebensmittel und/oder des Raums, wo das Lebensmittel (6) eingeführt wird, verwaltet, um den pH-Wert im pH-Sicherheitsbereich zu setzen.

2. Vorrichtung zum Steuern, Analysieren und Verwalten der Konservierungsschritten und/oder zur Lebensmittelverarbeitung in einem beweglichen oder festen geschlossenen Raum nach Anspruch 1, **dadurch gekennzeichnet, dass** das pH-Messsystem, das ein integriertes pH-Kalibrierungssystem zum Steuern und Messen vom pH (10) hat, mit einem oder mehreren pH-Sonden, mit zwei Lösungen mit bekannten pH und mit einer Software versehen ist, die vor und/oder während jedes Schritts eine oder mehrere pH-Sonden durch sequentielles Eintauchen der Sonde(n) in den zwei Lösungen bei bekanntem pH kalibriert, wobei die pH-Kurve 0 bis 14 gezeichnet wird, wobei das integrierte, pH-metrische Softwaresystem parametrisiert und registriert wird.

3. Vorrichtung zum Steuern, Analysieren und Verwalten der Konservierungsschritten und/oder zur Lebensmittelverarbeitung in einem beweglichen oder festen geschlossenen Raum nach Anspruch 1 oder 2, **dadurch gekennzeichnet, dass** die Mittel zum Steuern der physikalischen Parameter der Lebensmittel und/oder des Raums, wo das Lebensmittel (6) eingeführt wird, eine oder mehrere Temperatursonden, eine oder mehrere Feuchtigkeitssonden, eine oder mehrere Sonden zum Steuern der Luftgeschwindigkeit und/oder des Schüttelns der Lebensmittel sind.

4. Vorrichtung zum Steuern, Analysieren und Verwalten der Konservierungsschritten und/oder zur Lebensmittelverarbeitung in einem beweglichen oder festen geschlossenen Raum nach Anspruch 1, **dadurch gekennzeichnet, dass** alle Daten über die physischen Elementen des Raums und des Lebensmittels, das in einem festen oder beweglichen geschlossenen Raum eingeführt ist, kontinuierlich oder an vorbestimmten und programmierbaren Zeitintervallen erfasst werden, wobei sie in jedem Konservierungs- und/oder Verwaltungsprozess, jeder Kalibrierungsoperation des pH-Messsystems, jedem Fehler des Änderungsmittels der physikalischen Parameter des geschlossenen Raums und/oder des Lebensmittels, jedem Fehler des Steuermittels der physikalischen Parameter des geschlossenen Raums und/oder des Lebensmittels in der Haupteinheit gespeichert werden.

5. Verfahren zum Steuern, Analysieren und Verwalten der Konservierungsschritten und/oder zur Lebensmittelverarbeitung in einem beweglichen oder festen geschlossenen Raum, umfassend das Einführen in einem Softwareprogramm, das in einer Haupteinheit integriert ist, der Daten des Lebensmittels oder der Lebensmittel, der physikalischen Parameter des geschlossenen Raums und/oder des Lebensmittels, des Konservierungs- und/oder Verarbeitungsschritts, dem sich das Lebensmittel und/oder das Raum, wo das Lebensmittel eingeführt wird, unterziehen müssen, wobei das pH gemessen wird und das pH-Messsystem kalibriert wird, **dadurch gekennzeichnet, dass** das Softwareprogramm, das in der Haupteinheit integriert ist, einen pH-Sicherheitsbereich des Lebensmittels speichert, der in jedem vom Benutzer eingestellten Konservierungs- und/oder Verarbeitungsschritt beibehalten werden muss und der in jedem Schritt und für jeden Wert vom gemessenen pH, das außerhalb des Sicherheitsbereichs jedes Schritts ist, ein Verwaltungsprogramm der physikalischen Parameter des Lebensmittels und/oder des Raums, wo das Lebensmittel (6) eingeführt wird, verwaltet, das den pH-Wert innerhalb des pH-Sicherheitsbereichs zurückbringt.

6. Verfahren zum Steuern, Analysieren und Verwalten der Konservierungsschritten und/oder zur Lebensmittelverarbeitung in einem beweglichen oder festen geschlossenen Raum, nach Anspruch 5, **dadurch gekennzeichnet, dass** die Kalibrierung des Systems zum kontinuierlichen Messen von pH in einem Lebensmittel durch die Kalibrierung der Sonden in zwei Lösungen bei bekanntem pH und durch eine Software erfolgt, die im System integriert ist, das die pH-Kurve 0 bis 14 zeichnet.

7. Verfahren zum Steuern, Analysieren und Verwalten der Konservierungsschritten und/oder zur Lebensmittelverarbeitung in einem beweglichen oder festen geschlossenen Raum, nach Anspruch 5, **dadurch gekennzeichnet, dass** am Ende jedes Schritts eine Datenreihe innerhalb der Vorrichtung gespeichert wird, wobei diese Datenreihe positiv, wenn der Schritt mit dem pH innerhalb der Sicherheitsbereiche durchgeführt wurde, und negativ ist, wenn der Schritt mit dem pH außerhalb der Sicherheitsbereiche des gewählten Bereichs durchgeführt wurde.

8. Verfahren zum Steuern, Analysieren und Verwalten der Konservierungsschritten und/oder zur Lebensmittelverarbeitung in einem beweglichen oder festen geschlossenen Raum, nach Anspruch 6, **dadurch gekennzeichnet, dass** der gemessene pH-Wert kontinuierlich überwacht und/oder von einer Datenübertragungsvorrichtung (3) auf ein oder mehrere in der Vorrichtung kodierte Behälter übertragen wird.

9. Verfahren zum Steuern, Analysieren und Verwalten der Konservierungsschritten und/oder zur Lebensmittelverarbeitung in einem beweglichen oder festen geschlossenen Raum, nach Anspruch 7, **dadurch gekennzeichnet, dass** die Haupteinheit am Ende jedes Konservierungs- und/oder Verarbeitungsschritts, eine Wertreihe erzielt, wobei der nächste Schritt automatisch anfängt, wenn die Werten innerhalb des eingestellten Sicherheitsbereichs sind, und die Vorrichtung vor dem Beginn des nächsten Schritts einen Report der Werte kommunizieren und auf Anweisungen seitens des Benutzers warten wird, die angeben, ob sie den Konservierungs- und/oder Verarbeitungsprozess fortsetzen oder stoppen muss, wenn diese Werte außerhalb des Sicherheitsbereichs sind.

10. Verfahren zum Steuern, Analysieren und Verwalten der Konservierungsschritten und/oder zur Lebensmittelverarbeitung in einem beweglichen oder festen geschlossenen Raum, nach Anspruch 6, **dadurch gekennzeichnet, dass** das Messsystem zum Messen von pH in einem Lebensmittel in einem Vorrichtungsobjekt der vorliegenden Erfindung integriert ist, und dass die Kalibrierung durch das Eintauchen der Steuerungsmittel zum Steuern der pH-Messung (10) in zwei Lösungen bei bekannten pH jeweils bei pH 7 und 4 erfolgt, so dass die Software den Unterschied des Potentials erfassen kann, das von der pH-Messsonde (10) bei einem spezifischen, bekannten Wert der Lösung mit bekannten pH hergestellt wird, wobei die korrekte Kalibrierung der pH-Kurve 0 bis 14 im integrierten pH-Messsystem bestimmt wird.

## Revendications

1. Dispositif pour contrôler, analyser et gérer les phases de conservation et/ou transformation alimentaire dans un espace fermé mobile ou fixe comprenant une interface utilisateur avec des éléments d'entrée de données (1), une unité de commande principale avec mémoire et logiciel (2), un système de moyens de gestion des paramètres physiques de l'aliment et/ou de l'espace dans lequel ledit aliment (6) est inséré, moyens intégrés pour contrôler et mesurer le pH, un système de calibration des moyens pour contrôler et mesurer le pH (10), moyens pour contrôler des paramètres physiques de l'aliment et/ou de l'espace dans lequel ledit aliment (6) est inséré, **caractérisé en ce que** l'unité principale a un programme logiciel qui a dans sa mémoire un ou plusieurs aliments à conserver et/ou à transformer, et pour chaque aliment et pour chaque phase la succession de variations des paramètres physiques pour chaque phase de conservation et/ou transformation, qui a pour chaque phase un marge de sécurité de pH dans lequel ledit logiciel gère, pour chaque valeur du pH mesuré à l'extérieur du marge de sécurité de chaque phase, un programme de gestion des paramètres physiques de l'aliment et/ou de l'espace dans lequel ledit aliment (6) est inséré pour porter la valeur de pH à l'intérieur du marge de sécurité de pH.

2. Dispositif pour contrôler, analyser et gérer les phases de conservation et/ou transformation alimentaire dans un espace fermé mobile ou fixe selon la revendication 1, **caractérisé en ce que** le système de mesure du pH, qui a un système de calibration de pH intégré pour contrôler et mesurer le pH (10), est pourvu d'une ou plusieurs sondes pour pH, deux solutions avec pH connu et un logiciel qui, avant et/ou pendant chaque phase, calibre une ou plusieurs sondes pour pH à travers l'immersion séquentielle de ladite/lesdites sonde/s dans les deux solutions avec pH connu, en traçant la courbe de pH de 0 à 14, en paramétrant et en enregistrant le système logiciel pH-métrique.

3. Dispositif pour contrôler, analyser et gérer les phases de conservation et/ou transformation alimentaire dans un espace fermé mobile ou fixe selon la revendication 1 ou 2, **caractérisé en ce que** les moyens pour contrôler des paramètres physiques de l'aliment et/ou de l'espace dans lequel ledit aliment (6) est inséré, sont une ou plusieurs sondes de température, une ou plusieurs sondes d'humidité, une ou plusieurs sondes pour contrôler la vitesse de l'air et/ou pour le secouage de l'aliment.

4. Dispositif pour contrôler, analyser et gérer les phases de conservation et/ou transformation alimentaire dans un espace fermé mobile ou fixe selon la revendication 1 **caractérisé en ce que** toutes les données sur les éléments physiques de l'espace et de l'aliment inséré dans un espace fermé fixe ou mobile, sont détectées de façon continuelle ou dans des intervalle de temps prédéterminées et programmables, dans tous les procédés de conservation et/ou transformation, toutes les opérations de calibration du système de mesure du pH, toutes les erreurs des moyens de variation des paramètres physiques de l'espace fermé et/ou dudit aliment, toutes les erreurs des moyens de contrôle des paramètres physiques de l'espace fermé et/ou dudit aliment sont mémorisées dans l'unité principale.

5. Procédé pour contrôler, analyser et gérer les phases de conservation et/ou transformation alimentaire dans un espace fermé mobile ou fixe, comprenant l'introduction, dans un programme logiciel intégré dans une unité principale, des données de l'aliment ou des aliments, des paramètres physiques de l'espace fermé et/ou dudit aliment, des phases de conservation et/ou transformation auxquelles l'aliment et/ou l'espace dans lequel ledit aliment est inséré se doivent soumettre, en mesurant le pH et en calibrant le système de mesure du pH, **caractérisé en ce que** ledit programme logiciel intégré dans l'unité principale mémorise un marge de sécurité du pH de l'aliment qui doit être maintenu dans chaque phase de conservation et/ou transformation établi par l'utilisateur et qui gère, dans chaque phase, pour chaque valeur du pH mesuré qui se trouve à l'extérieur du marge de sécurité de chaque phase, un programme de gestion des paramètres physiques de l'aliment et/ou de l'espace dans lequel ledit aliment (6) est inséré, qui ramène la valeur de pH à l'intérieur du marge de sécurité du pH.

6. Procédé pour contrôler, analyser et gérer les phases de conservation et/ou transformation alimentaire dans un espace fermé mobile ou fixe, selon la revendication 5, **caractérisé en ce que** la calibration du système pour des mesures continues de pH dans un aliment est réalisée à travers la calibration des sondes dans deux solutions avec pH connu et à travers un logiciel intégré dans le système qui trace la courbe de pH de 0 à 14.

7. Procédé pour contrôler, analyser et gérer les phases de conservation et/ou transformation alimentaire dans un espace fermé mobile ou fixe, selon la revendication 5, **caractérisé en ce que**, à la fin de chaque phase, une série de données est mémorisée dans le dispositif, ladite série de données étant positive si la phase était effectuée avec le pH dans les limites de sécurité, et négative si la phase était effectuée avec le pH à l'extérieur des limites de sécurité du marge choisi.

8. Procédé pour contrôler, analyser et gérer les phases de conservation et/ou transformation alimentaire dans un espace fermé mobile ou fixe, selon la revendication 6, **caractérisé en ce que** la valeur de pH mesurée est surveillée de façon continuelle et/ou transmise d'un dispositif de données transmission (3) à un ou plusieurs récipients codés dans ledit dispositif.

9. Procédé pour contrôler, analyser et gérer les phases de conservation et/ou transformation alimentaire dans un espace fermé mobile ou fixe, selon la revendication 7, **caractérisé en ce que** l'unité principale, à la fin de chaque phase de conservation et/ou transformation, obtient un ensemble de valeurs, la phase suivante commençant automatiquement si ces values sont toutes à l'intérieur du marge de sécurité établi, et, si ces values se trouvent à l'extérieur du marge de sécurité, le dispositif avant le début de la suivante communiquera et mémorisera un rapport des valeurs, et attendra les instructions de l'utilisateur, indiquant s'il doit continuer ou arrêter le procédé de conservation et/ou transformation.

10. Procédé pour contrôler, analyser et gérer les phases de conservation et/ou transformation alimentaire dans un espace fermé mobile ou fixe, selon la revendication 6, **caractérisé en ce que** le système de mesure du pH dans un aliment est intégré dans l'objet de dispositif de la présente invention, et que la calibration est effectuée à travers l'immersion des moyens de contrôle de la mesure du pH (10) dans deux solutions avec pH connu respectivement avec pH 7 et 4, de manière que le logiciel peut acquérir la différence du potentiel produit par la sonde de mesure de pH (10) à ladite valeur connue de la solution avec pH connu, en déterminant la calibration correcte de la courbe de pH de 0 à 14 dans le système de mesure de pH intégré.
